(19) **Europäisches Patentamt / European Patent Office / Office européen des brevets**

(11) **EP 2 437 339 A1**

(12) **EUROPEAN PATENT APPLICATION**

(43) Date of publication:
**04.04.2012 Bulletin 2012/14**

(51) Int Cl.:
*H01M 10/04* (2006.01)  *H01M 10/44* (2006.01)
*H01M 10/48* (2006.01)  *H02J 7/00* (2006.01)

(21) Application number: **11178097.9**

(22) Date of filing: **19.08.2011**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(30) Priority: **30.09.2010 JP 2010220236**

(71) Applicant: **Hitachi Ltd.
Tokyo 100-8280 (JP)**

(72) Inventors:
• **Fujimura, Hidekazu
Tokyo, 100-8220 (JP)**
• **Takahashi, Kazuo
Tokyo, 100-8220 (JP)**

(74) Representative: **MERH-IP
Matias Erny Reichl Hoffmann
Paul-Heyse-Straße 29
80336 München (DE)**

(54) **Secondary battery system for detecting distribution of heat generation**

(57)    A secondary battery system capable of controlling charge/discharge of a secondary battery that includes a core winding, includes: a first temperature measurement unit that measures a temperature in a central area of the core winding; a second temperature measurement unit that measures a temperature in an outer circumferential area of the core winding; a temperature difference calculation unit that calculates a temperature difference $\Delta T$ between the temperature in the central area and the temperature in the outer circumferential area at the core winding, respectively measured by the first temperature measurement unit and the second temperature measurement unit; a change quantity calculation unit that calculates a change quantity $\Delta TT$ indicating an extent of change in the temperature difference $\Delta T$ between the temperatures in the central area and in the outer circumferential area of the core winding represented by a difference between a temperature difference $\Delta T1$ calculated at a start of use of the secondary battery and a temperature difference $\Delta T2$ calculated after a predetermined length of time elapses following the start of use of the secondary battery; and a heat generation distribution detection unit that executes detection of a heat generation distribution at a winding assembly based upon the change quantity $\Delta TT$.

**EP 2 437 339 A1**

## Description

The disclosure of the following priority application is herein incorporated by reference: Japanese Patent Application No. 2010-220236 filed September 30, 2010.

The present invention relates to a detection method and a detection device that enable detection of the state of a storage battery such as a lead acid battery, a nickel hydride battery or a lithium ion battery.

New developments reported in technologies related to secondary batteries such as lithium-ion batteries, which are used as power sources in hybrid vehicles, electric vehicles, hybrid railway vehicles and the like and as industrial storage batteries for electric power storage conservation are followed with great interest. As secondary batteries are utilized in an ever widening range of applications, there is a need for greater charge/discharge capacities, which makes it necessary to increase the size of the secondary batteries.

A lithium ion battery as a secondary battery, includes a core winding formed by winding a positive electrode and a negative electrode in a coil or in a prismatic form via a separator, an electrolyte and a battery case housing the core winding and the electrolyte.

More heat is bound to be generated as a larger lithium ion battery is charged or discharged, leading to poorer heat dispersal. This, in turn, leads to a concern that since the temperature of the battery being charged or discharged rises to a greater extent and the range of temperature distribution at the core winding widens, localized degradation may occur more readily or the performance of the battery may be compromised more readily.

For this reason, it is necessary to ascertain the condition within the cell in detail as accurately as possible and reflect the information effectively in the operation and control of the secondary battery or in the maintenance · management of the battery, so as to ensure that the secondary battery is operated with a high level of safety while assuring reliability and an extended service life.

The temperature condition in a secondary battery is most often ascertained by fixing a temperature sensor at the cell surface and measuring the temperature via the temperature sensor as disclosed in, for instance, Japanese Laid Open Patent Publication No. 2001-313087. As an alternative, a temperature sensor may be inserted within a cell core winding in the secondary battery, instead of at the cell surface, as disclosed in Japanese Laid Open Patent Publication No. H10-055825, or a plurality of temperature sensors may be disposed within the battery so as to manage the cell temperature condition based upon temperature information provided by the plurality of temperature sensors, as disclosed in Japanese Laid Open Patent Publication No. 2007-165211.

In Japanese Laid Open Patent Publication No. 2001-313087 in particular, which discloses a method for detecting cell degradation by measuring the temperature as described above, a cell abnormality detection method whereby the cell is determined to have become degraded or to be malfunctioning if the rate of cell surface temperature change indicates a deviance from those at other cells or from past cell surface temperature change rate history.

The object of the art disclosed in Japanese Laid Open Patent Publication No. H10-055825 or Japanese Laid Open Patent Publication No. 2007-165211 is not a cell abnormality detection but rather, both publications relate to battery operational control.

Namely, the secondary battery disclosed in Japanese Laid Open Patent Publication No. H10-055825 includes a temperature sensor disposed inside the core winding at a position where the temperature is expected to rise to a highest level and a temperature control means. In the art disclosed in the publication, precise temperature control is achieved based upon the cell internal temperature instead of the cell surface temperature by bearing in mind that the difference between the temperature within the cell and the temperature outside the cell is bound to be greater in a larger cell.

In the secondary battery disclosed in Japanese Laid Open Patent Publication No. 2007-165211, temperature sensors are disposed at a plurality of locations, and, more specifically, at a position where the core winding temperature is bound to rise to a highest level and at a position where the core winding temperature is bound to remain at a lowest level, so as to detect the temperatures at the various locations. Then, a decision pertaining to an operation, such as a cell cooling operation or a charge/discharge control operation, that may be executed to achieve the optimal cell temperature, is made by comparing the detected temperatures with a tolerated temperature level and determining the differences between the detected temperatures and the tolerated temperature.

However, while heat generation taking place at the cell itself is a critical factor related to cell degradation, i.e., an increase in the internal resistance at the battery, which also greatly affects the service life of the battery and the accuracy of abnormality detection, hardly any effort has been made so far toward ascertaining the state of heat generation occurring in the cell or how the state of heat generation may actually change.

For instance, while the abnormality detection means disclosed in Japanese Laid Open Patent Publication No. 2001-313087 operates on the premise that cell temperature change rate is determined based upon how the heat generation quantity, i.e., the amount of heat generated at the cell increases, the measurement target is the surface temperature and thus, no information indicating a change in the cell internal state, e.g., a change in the heat generation distribution, can be obtained.

While Japanese Laid Open Patent Publication No. H10-055825 and Japanese Laid Open Patent Publication No. 2007-165211 do take the internal temperature into account, their main object is to compare temperature levels and use the comparison results in charge/ discharge operation, and neither publication touches upon a method that may be adopted to diagnose degradation or malfunction.

Even when the overall heat generation quantity for the entire cell changes only slightly, a significant amount of heat may actually be being generated locally or a significant heat generation distribution change may actually be occurring within the cell as the internal resistance changes due to, for instance, an elevated level of reaction polarization or diffusion polarization. However, through the art disclosed in Japanese Laid Open Patent Publication No. H10-055825 or Japanese Laid Open Patent Publication No. 2007-165211, which simply provides the cell internal temperature information, or through the art disclosed in Japanese Laid Open Patent Publication No. 2001-313087, which does not detect any heat generation distribution change that may occur within the cell as has been described above, an abnormality cannot be detected until a rise in the surface temperature occurring as the heat generation quantity changes becomes prominent.

Accordingly, the present invention provides a detection method through which an abnormality can be detected at an earlier stage by ascertaining any change occurring in the heat generation distribution and specifically how such a change manifests, as a more desirable alternative to the temperature measurement-based abnormality detection methods of the related art.

According to the 1 st aspect of the present invention, a secondary battery system capable of controlling charge/discharge of a secondary battery that includes a core winding, comprises: a first temperature measurement unit that measures a temperature in a central area of the core winding; a second temperature measurement unit that measures a temperature in an outer circumferential area of the core winding; a temperature difference calculation unit that calculates a temperature difference $\Delta T$ between the temperature in the central area and the temperature in the outer circumferential area at the core winding, respectively measured by the first temperature measurement unit and the second temperature measurement unit; a change quantity calculation unit that calculates a change quantity $\Delta TT$ indicating an extent of change in the temperature difference $\Delta T$ between the temperatures in the central area and in the outer circumferential area of the core winding represented by a difference between a temperature difference $\Delta T1$ calculated at a start of use of the secondary battery and a temperature difference $\Delta T2$ calculated after a predetermined length of time elapses following the start of use of the secondary battery; and a heat generation distribution detection unit that executes detection of a heat generation distribution at a winding assembly based upon the change quantity $\Delta TT$.

According to the 2nd aspect of the present invention, in the secondary battery system according to the 1 st aspect, it is preferred that if the change quantity $\Delta TT$ is less than a first threshold value, the heat generation distribution detection unit determines that heat generation density is higher toward an outer circumferential side beyond a middle area of the winding assembly along a radial direction.

According to the 3rd aspect of the present invention, in the secondary battery system according to the 1 st aspect, it is preferred that if the change quantity $\Delta TT$ is greater than a second threshold value, the heat generation distribution detection unit determines that heat generation density is higher toward a center beyond a middle area of the winding assembly along a radial direction.

According to the 4th aspect of the present invention, in the secondary battery system according to the 1 st aspect, it is preferred that if the change quantity $\Delta TT$ is equal to or greater than a first threshold value and equal to or less than a second threshold value, the heat generation distribution detection unit determines that heat generation density is evenly distributed or that the heat generation density is high at the winding assembly in a middle area thereof along a radial direction.

According to the 5th aspect of the present invention, in the secondary battery system according to the 1 st aspect, it is preferred that: the secondary battery system further comprises a third temperature measurement unit that measures a temperature in a surrounding area around the secondary battery; the temperature difference calculation unit calculates a temperature difference $\Delta Tc$ between the temperature in the outer circumferential area of the core winding and the temperature in the surrounding area around the secondary battery, respectively measured by the second temperature measurement unit and the third temperature measurement unit; the change quantity calculation unit calculates a change quantity $\Delta TTc$, indicating an extent of change in the temperature difference $\Delta Tc$ between the temperature in the outer circumferential area of the core winding and the temperature in the surrounding area around the secondary battery, represented by a difference between a temperature difference $\Delta Tc1$ calculated at a start of use of the secondary battery and a temperature difference $\Delta Tc2$ calculated after a predetermined length of time elapses following the start of use of the secondary battery; and if an absolute value of the change quantity $\Delta TTc$ is less than a predetermined value, the heat generation distribution detection unit judges that the results of the detection are correct.

According to the 6th aspect of the present invention, in the secondary battery system according to the 1 st aspect, it is preferred that: the secondary battery system further comprises a third temperature measurement unit that measures a temperature in a surrounding area around the secondary battery; the temperature difference calculation unit calculates a temperature difference $\Delta Tc$ between the temperature in the outer circumferential area of the core winding and the temperature in the surrounding area around the secondary battery, respectively measured by the second temperature measurement unit and the third temperature measurement unit; the change quantity calculation unit calculates a change quantity $\Delta TTc$, indicating an extent of change in the temperature difference $\Delta Tc$ between the temperature in the outer circumferential area of the core winding and the temperature in the surrounding area around the secondary battery, represented by a difference between the temperature difference $\Delta Tc1$ calculated at a start of use of the secondary battery and the temperature difference $\Delta Tc2$ calculated after a predetermined length of time elapses following the start of use of the secondary battery; and the heat generation distribution detection unit detects the heat generation distribution at the winding assembly based upon a ratio $\alpha$ of the change quantity $\Delta TT$ and the change quantity $\Delta TTc$.

According to the 7th aspect of the present invention, in the secondary battery system according to the 6th aspect, it is preferred that if the ratio $\alpha$ of the change quantity $\Delta TT$ and the change quantity $\Delta TTc$ is less than a third threshold value, the heat generation distribution detection unit determines that the heat generation density is higher toward an outer circumferential side beyond a middle area of the winding assembly along a radial direction.

According to the 8th aspect of the present invention, in the secondary battery system according to the 6th aspect, it is preferred that if the ratio $\alpha$ of the change quantity $\Delta TT$ and the change quantity $\Delta TTc$ is greater than a fourth threshold value, the heat generation distribution detection unit determines that heat generation density is higher toward a center beyond a middle area of the winding assembly along a radial direction.

According to the 9th aspect of the present invention, in the secondary battery system according to the 6th aspect, it is preferred that if the ratio $\alpha$ of the change quantity $\Delta TT$ and the change quantity $\Delta TTc$ is equal to or greater than a third threshold value and equal to or less than a fourth threshold value, the heat generation distribution detection unit determines that heat generation density is evenly distributed or that the heat generation density is high at the winding assembly in a middle area thereof along a radial direction.

According to the 10th aspect of the present invention, in the secondary battery system according to the 1 st aspect, it is preferred that the first temperature measurement unit is installed at a surface of an axial core disposed in the central area of the core winding.

According to the 11th aspect of the present invention, in the secondary battery system according to the 1 st aspect, it is preferred that the second temperature measurement unit is installed at a surface of a cell case in which the core winding is housed in a sealed state.

BRIEF DESCRIPTION OF THE DRAWINGS

FIG 1 is a perspective presenting an external view of a cylindrical battery core winding in conjunction with which an embodiment of the present invention is achieved.

FIG. 2A is a graph indicating various heat generation distribution patterns as observed in the first embodiment of the present invention.

FIG 2B is a graph comparing various temperature distributions manifesting along the radial direction at the core winding obtained by analyzing the heat generation distribution patterns.

FIG. 3A shows various positions where local heat generation occurs in a lateral sectional view of the core winding achieved in a second embodiment of the present invention.

FIG. 3B is a graph comparing results obtained by analyzing the temperature distributions manifesting along the radial direction at the core winding when local heat generation occurs at the local heat generation positions indicated in FIG. 3A.

FIG. 4A is a graph indicating an electric current pattern used in conjunction with the detection method achieved in the second embodiment of the present invention.

FIG 4B is a graph indicating the core winding temperatures detected in conjunction with the electric current pattern.

FIG. 5A is a graph indicating an electric current pattern used in conjunction with the detection method achieved in a fourth embodiment of the present invention.

FIG. 5B is a graph indicating the core winding temperatures detected in conjunction with the electric current pattern.

FIG. 6 shows measurement point positions in a longitudinal sectional view taken near a middle area along the direction in which the winding axis of the cylindrical battery achieved in a fifth embodiment of the present invention extends.

FIG 7 is a schematic system configuration diagram of the battery module detection system achieved in a sixth embodiment of the present invention.

FIG. 8 presents a flowchart of the arithmetic operation processing executed by the arithmetic operation unit during normal operation in the sixth embodiment of the present invention.

FIG. 9 presents a flowchart of the arithmetic operation processing executed by the arithmetic operation unit during a diagnostic operation in the sixth embodiment of the present invention.

DESCRIPTION OF PREFERRED EMBODIMENTS

The following is a description of the embodiments of the present invention, given in reference to the drawings.

- Embodiment 1 -

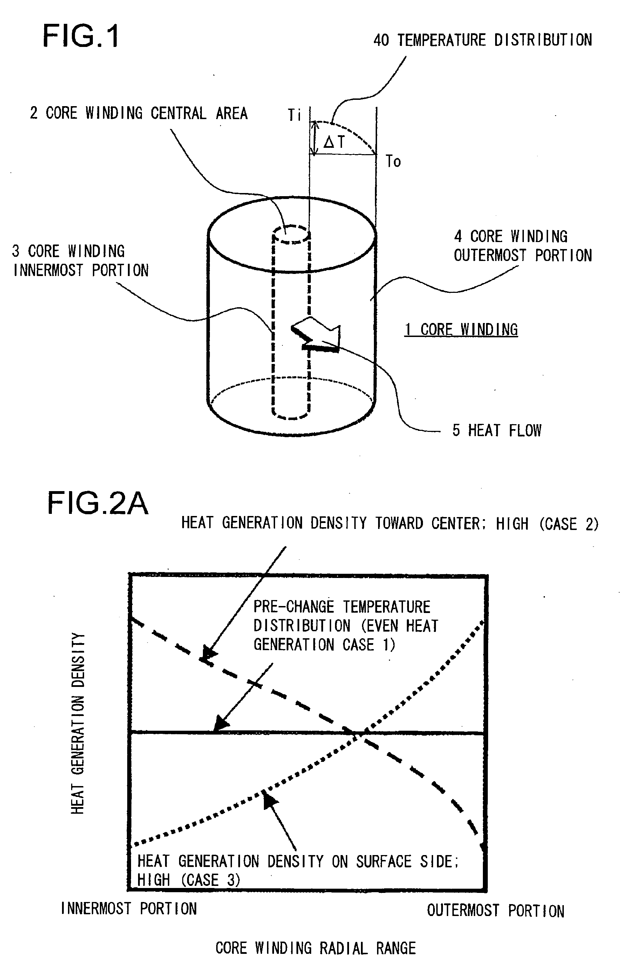

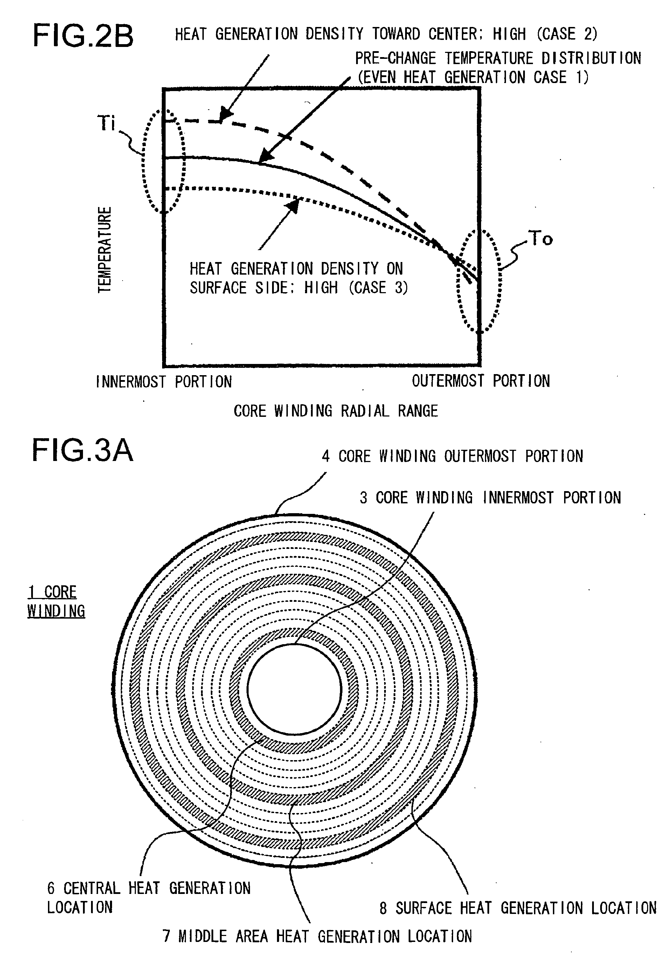

In reference to FIGS. 1 and 2, the basic detection principle adopted for the lithium ion battery achieved in the first embodiment of the present invention in detection of any change in the heat generation density distribution that may occur in the lithium ion battery and detection of specifically how such a change occurs, is described.

FIG. 1 shows a core winding 1 of a cylindrical battery. The core winding 1 is a laminated assembly formed by winding a positive electrode plate and a negative electrode plate via a separator (none shown). The core winding has a hollow center 2 where an axial center core of the winding is disposed. As a charge/discharge occurs, an electric current flows inside the core winding and, as a result, heat is generated in the core winding. The cylindrical battery is structured such that the heat thus generated passes through a core winding outermost portion 4 and is released to the outside.

This means that a temperature distribution 40 at the core winding 1 invariably manifests a temperature difference $\Delta T$ (= Ti - To) with Ti representing a temperature measured at an innermost portion and To representing a temperature measured at an outermost portion, as the heat moves from the inside toward the outside shown by a heat flow 5.

FIG. 2A shows a temperature distribution (case 1) manifesting when the heat generation quantity per unit volume within the core winding, i.e., the heat generation density per unit volume inside the core winding, is uniform along the radius of the core winding and two temperature distributions that may manifest when the heat generation quantity per unit volume is uneven along the radius of the core winding. One of the two temperature distributions manifesting when the heat generation quantity per unit volume is uneven, which is referred to as case 2, is observed when the heat generation density is higher on the inner side of the core winding and gradually decreases further toward the outer side. The other temperature distribution is referred to as case 3, and is observed when the distribution pattern is completely reversed.

FIG 2B is a graph comparing the results obtained by analyzing the radial temperature distributions corresponding to the heat generation density distributions in the three cases characterized as described above, as observed in a middle area along the direction in which the core winding axis extends. It is to be noted that the overall quantities of heat generated at the winding in the three cases are equal to one another.

Since the same quantity of heat is generated for the whole battery, there is hardly any variance among the core winding outermost portion temperatures To in the three cases, albeit the core winding outermost portion temperature To in case 3 tends to be slightly higher than and the core winding outermost portion temperature To in case 2 tends to be slightly lower than the core winding outermost portion temperature To in case 1 in which heat is generated evenly. However, more pronounced differences are observed with regard to the core winding innermost portion temperature Ti, which, in contrast to the core winding outermost portion temperature, is higher in case 2 than that in case 1 and is lower in case 3 than that in case 1. In other words, as the relative heat generation density inside the core winding becomes higher, the core winding innermost portion temperature, too, becomes higher, resulting in a greater temperature difference $\Delta T$ between the area near the core winding center and an area near the outer circumference.

A change in the heat generation density can be attributed to electric current concentration or a change in the internal resistance, and thus, such a change in the heat generation density can be assumed to indicate some sort of degradation or fault in the battery.

Based upon the relationship between the heat generation distribution and the temperature distribution described above, a change in the heat generation density occurring in the core winding can be detected and thus any fault occurring at the battery can be detected by measuring the temperature Ti and the temperature To at a core winding innermost portion and a core winding outermost portion.

Next, a specific method that may be adopted in the detection is described. First, the temperatures Ti and To at a core winding innermost portion and a core winding outermost portion are measured in a given operation mode at an initial phase of the operation, a temperature difference $\Delta T(1)$ between the innermost portion temperature and the outermost portion temperature is calculated and temperature data Ti(1), To(1) and $\Delta T(1)$ are stored.

Next, after a given length of time elapses, the temperatures Ti(2) and To(2) are measured at an core winding innermost portion and an core winding outermost portion in the same operation mode, the temperature difference $\Delta T(2)$ between the temperatures is determined and Ti(1), To(1) and $\Delta T(1)$ are stored as temperature data.

If the ambient temperature changes during the battery operation, Ti and To will take different values even if the battery is operated in exactly the same operation mode. Accordingly, in order to eliminate any influence attributable to a change in the environment, the ambient temperature Too is also measured, a difference $\Delta Tc$ between To and Too is determined and $\Delta Tc(1)$ and $\Delta Tc(2)$ are stored respectively as part of the initial temperature data and as part of the subsequent temperature data.

At the time of diagnosis, the extents of changes in $\Delta T$ and $\Delta Tc$, i.e., $\Delta TT$ (= $\Delta T(2)$ - $\Delta T(1)$) and $\Delta TTc$ (= $\Delta Tc(2)$ - $\Delta Tc(1)$), are calculated and the following decision is made based upon $\Delta TTc$ and $\Delta TT$.

No change or a slight increase in $\Delta TTc$ and $\Delta TT < 0$

$\rightarrow$ The heat generation quantity at the battery has changed only slightly but the heat generation density has become higher toward the surface side beyond the middle area along the radial direction.

No change or a slight decrease in $\Delta TTc$ and $\Delta TT > 0$

→ The heat generation quantity at the battery has changed only slightly but the heat generation density has become higher toward the center beyond the middle area along the radial direction.

A minor change in $\Delta TTc$ and $\Delta TT \approx 0$

→ Only a small change in the heat generation quantity has occurred at the battery, and no change in the heat generation density or heat may be being generated unevenly with heat concentration around the middle area.

A higher level of operational reliability can be achieved and maintenance work can be performed by executing charge/discharge control so as to lessen the operational load on any cell judged to have manifested a heat generation distribution change or by taking action such as adjusting the cell replacement timing to an earlier time point than scheduled based upon the decision made through the process described above.

- Embodiment 2 -

As storage batteries are used in diverse applications, the current used to charge or discharge a storage battery may not always be the same but rather, the current may indeterminately change to take several different forms or the charge/discharge may be cyclically repeated over intervals. Under such circumstances, the heat generation quantity, too, will change in correspondence to the current value instead of remaining constant and the temperature at the storage battery will change in a complex manner. In addition, even in a storage battery operating consistently, the internal resistance in the battery will normally increase due to degradation occurring over time and thus, the heat generation quantity will tend to gradually increase, resulting in an upward tendency in the storage battery temperature.

The basic detection principle adopted in the embodiment, which enables detection of any abnormal local heat generation by distinguishing abnormal local heat generation occurring at a cell due to some sort of abnormality from a relatively even increase in the heat generation quantity in the entire battery core winding attributable to charge/discharge current operation or degradation occurring over time in an otherwise sound battery, is described below.

FIG 3A indicates three different positions where local heat generation occurs in a lateral sectional view of a core winding. Namely, local heat generation occurs at a central heat generation location 6, a middle-area heat generation location 7 and a surface-side heat generation location 8.

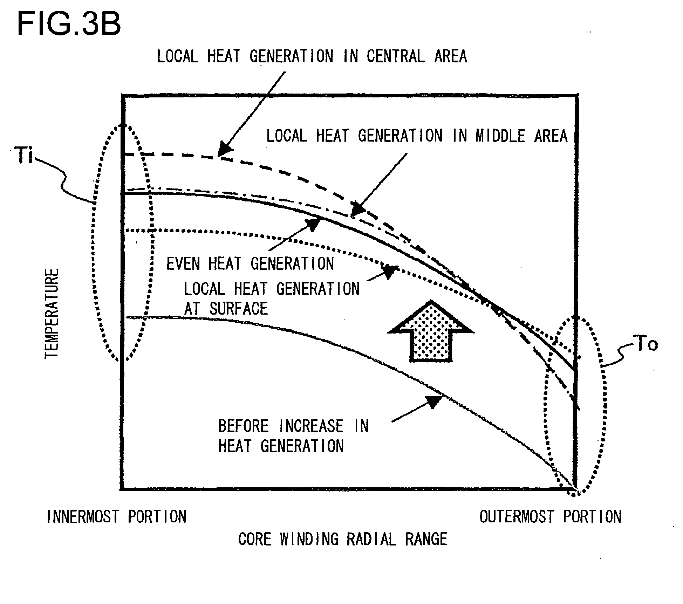

FIG. 3B is a graph comparing the results of temperature distribution analysis pertaining to the temperature distribution manifesting at the core winding along the radial direction prior to a heat generation quantity increase and the temperature distributions manifesting in three different scenarios, each corresponding to heat generation at one of the three heat generation locations described above. It also indicates analysis results pertaining to the temperature distribution manifesting when uniform heat generation occurs over the whole core winding instead of local heat generation.

In any of the scenarios described above, more heat is generated compared to the pre-heat generation state and thus, the overall temperature distribution curve corresponding to each scenario shifts upward relative to the temperature distribution prior to the heat generation quantity increase, as the graph in the figure indicates. However, in the case of the heat generation occurring in a central location, a lower temperature registers on the core winding outermost portion and a higher temperature registers on the core winding innermost portion relative to the temperature distribution manifesting when the heat generation quantity increases uniformly.

In the case of heat generation occurring at a surface location, a temperature distribution pattern that is the exact opposite of that described above manifests, whereas in the case of heat generation occurring at the middle area location, a temperature distribution pattern, which is substantially identical to that manifesting when the heat generation quantity increases uniformly, is observed. Namely, when local heat generation occurs further inward at the core winding, the temperature on the core winding innermost portion becomes higher and the temperature on the core winding outermost portion becomes lower relative to those measured when heat is generated uniformly. In other words, characteristics whereby $\Delta T$ assumes a greater value as local heat generation occurs further inward at the core winding manifest.

Based upon the relationship between the position of local heat generation and the temperature distribution described above, any local heat generation occurring in the core winding can be recognized and thus, a fault occurring at the battery can be detected by measuring the temperatures $Ti$ and $To$ on the core winding innermost portion and the core winding outermost portion and the ambient temperature $Too$.

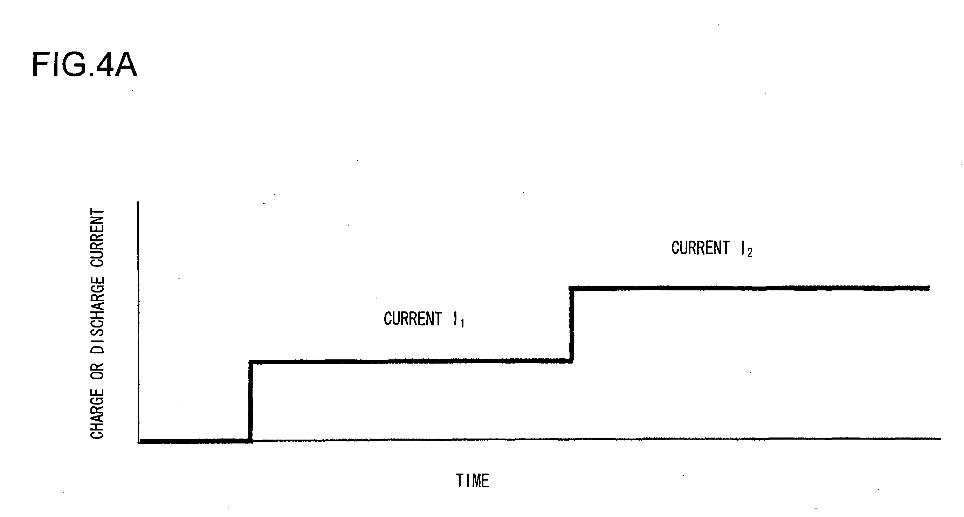

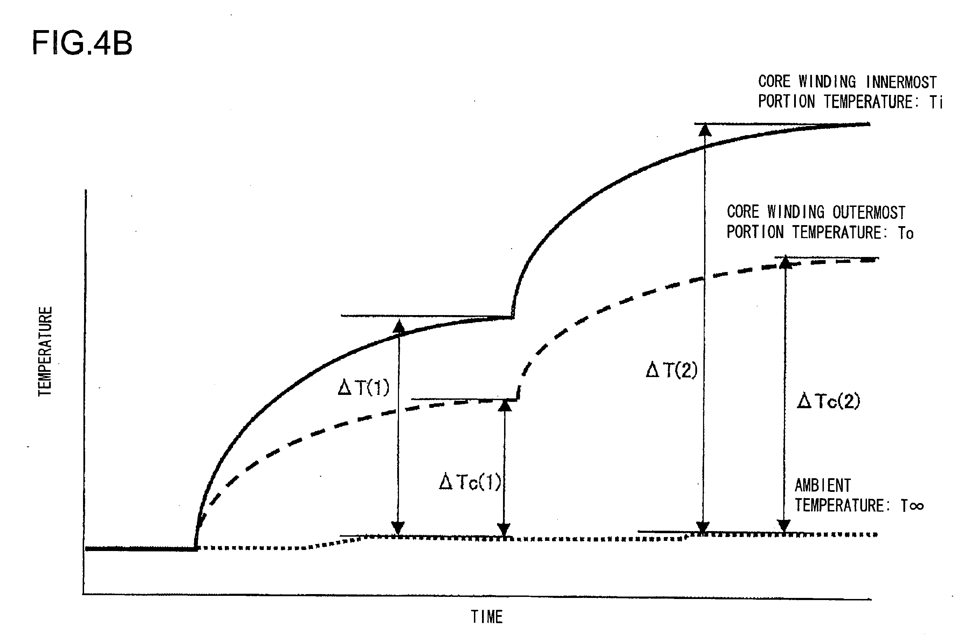

Next, a specific method that may be adopted in the embodiment is described. During an initial phase of operation in which the cell remains healthy and the internal resistance and the state of charge remain relatively uniform, the cell is charged or discharged with current that takes on two different values $I1$ and $I2$, as shown in FIG 4A. FIG. 4B indicates the core winding innermost portion temperature, the core winding outermost portion temperature and the ambient temperature measured during the initial phase of the charge or discharge operation.

Once the temperatures settle into a steady-state, the core winding innermost portion temperature $Ti(1)$, the core winding outermost portion temperature $To(1)$ and the ambient temperature $T\infty(1)$ corresponding to the current value $I1$ are measured and the temperature differences $\Delta T(1)$ and $\Delta Tc(1)$ are calculated as has been defined earlier. Likewise, the core winding innermost portion temperature $Ti(2)$, the core winding outermost portion temperature To(2) and the ambient temperature T∞ (2) corresponding to the current value I2 are measured and the temperature differences ΔT(2) and ΔTc(2) are calculated as has been defined earlier.

In the initial phase of operation, the heat generation density is assumed to increase substantially evenly as the current value shifts from I1 to I2. Accordingly, the extents of change in ΔT and ΔTc occurring as the heat generation quantity increases uniformly as described above, i.e., ΔTT (= ΔT(2) - ΔT(1)) and ΔTTc (= ΔTc(2) - ΔTc(1)) are calculated, α is calculated through the arithmetic operation executed as expressed below and the value thus calculated is stored as αo.

$$\alpha = \Delta TT / \Delta TTc$$

It is to be noted that α, which has proved through analysis to take a constant value regardless of the quantity of heat generated as long as the heat generation density increases uniformly for the whole core winding, is used as an index.

Subsequently, Ti, To and Too are measured constantly or intermittently during the operation, ΔT and ΔTc are calculated in correspondence to each set of Ti, To and Too and temperature data indicating the various values are then stored.

Once a predetermined length of operation time elapses, a diagnosis is executed by selecting data preceding and succeeding a change, preferably a significant change in ΔTc in the electric current data or in the temperature data as data indicating a heat generation quantity change, calculating ΔTTc and ΔTT as described earlier, calculating α (= ΔTT / ΔTTc) and comparing α thus calculated to αo so as to make a decision as described below.

- α < αo → The heat generation density is higher further outward relative to the middle area along the radial direction (local heat generation has occurred)
- α > αo → The heat generation density is higher further inward relative to the middle area along the radial direction (local heat generation has occurred)
- α ≈ αo → The heat generation density is distributed evenly, or the heat generation density is significant around the middle area along the radial direction (local heat generation has occurred in the middle area along the radial direction or heat is generated through the entire core winding).

A higher level of operational reliability can be achieved and maintenance work can be performed more effectively by executing charge/discharge control so as to lessen the operational load on any cell judged to have manifested a local heat generation distribution change or by taking action such as adjusting the cell replacement timing to an earlier time point than scheduled based upon the decision made through the process described above. It is to be noted that a higher heat generation density manifests where local heat generation has occurred.

- Embodiment 3 -

It is to be noted that if α is judged to be approximately equal to αo in the decision-making process described above, it cannot be ascertained whether local heat generation has occurred around the middle area or heat is being generated evenly. While the temperature distribution corresponding to the local heat generation around the middle area and the temperature distribution corresponding to the uniform heat generation quantity increase in FIG. 3B indicate substantially identical tendencies, the temperature at the middle area along the radial direction attributable to the local heat generation occurring in the middle area is higher than the corresponding middle area temperature attributable to the uniform heat generation, on close examination.

Accordingly, the temperature is measured at an additional temperature measurement point, i.e., at a middle area location of the core winding, so as to detect local heat generation in the middle area in the embodiment.

In addition to the temperatures Ti, To and Too, a temperature Tm is also measured near the middle area along the radial direction. Just as ΔTT and ΔTTc are calculated in embodiment 2, ΔTTm is calculated through the arithmetic operation executed as expressed below.

$$\Delta TTm = \Delta Tm(2) - \Delta Tm(1)$$

The temperature difference ΔTm is defined as; ΔTm = Tm - To. In addition, β calculated through the arithmetic operation executed as expressed below is used as a second index equivalent to the index α used in embodiment 2.

$$\beta = \Delta TTm / \Delta TTc$$

If α is judged to be approximately equal to αo in the decision-making process executed in embodiment 2, further decision-making is executed as follows. Namely,

- β > βo → Local heat generation may have occurred over the middle area along the radial direction.

It is to be noted that "βo" indicates the value assumed for β in the initial phase of the operation, which is determined in much the same way as the value αo in embodiment 2.

By incorporating the method described above, a decision as to whether or not local heat generation has occurred in the middle area can be made accurately and thus, a detection means capable of providing more detailed detection results and assuring a higher level of accuracy is achieved.

- Embodiment 4 -

In reference to the fourth embodiment, a heat generation distribution change detection method that may be adopted in detection of a change in the heat generation distribution during a cycling operation whereby charge/discharge is cyclically repeated, which is a common operation pattern assumed in conjunction with storage batteries, is described.

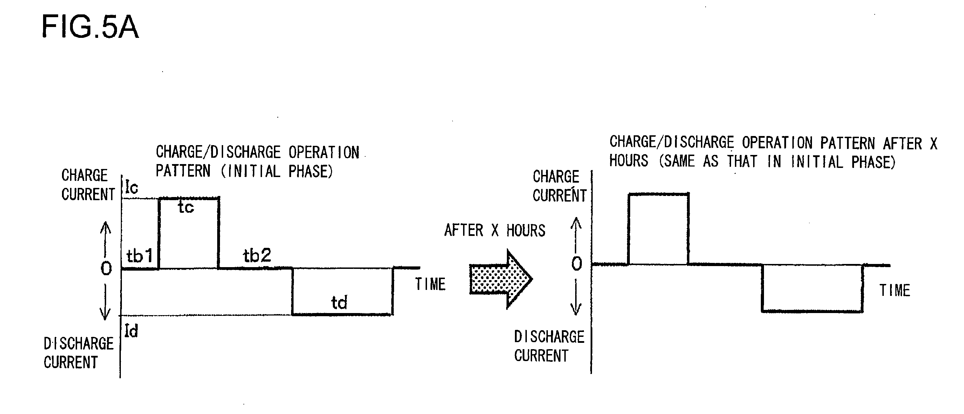

An example of a cycling operation pattern is shown on the left side of FIG 5A. A sequence of operations; charge → pause → discharge →pause, ..., is repeatedly executed in this operation pattern. In the cycling pattern shown on the right side of FIG. 5A, sustained X hours after the operation start, a charge current value Ic, a discharge current value Id, a charge time length tc, a discharge time length td, pause time lengths tb1 and tb2 remain completely unchanged from those at the operation start.

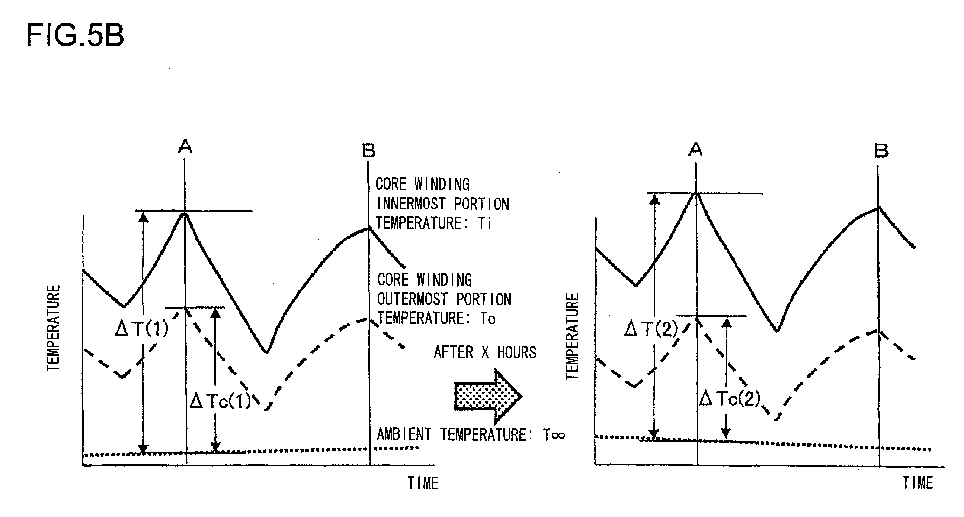

FIG. 5B shows the changes in the temperatures measured on the innermost portion and the outermost portion of the core winding and in the ambient temperature, occurring as the current level shifts as shown in FIG. 5A. The temperature changes observed in the initial phase of the operation are indicated on the left side, whereas the temperature changes observed after X hours are indicated on the right-hand side.

Temperatures measured on the innermost portion and on the outermost portion of the core winding assume profiles similar to each other. Namely, as soon as the charge/discharge starts, the temperature rises and the temperature drops once the operation enters a pause phase. There is hardly any time lag between the timing with which the temperature on the innermost portion rises and falls and the timing with which the temperature on the outermost portion rises and falls. In addition, since the battery is charged and discharged over short lengths of time, neither the temperature on the innermost portion nor the temperature on the outermost portion ever reaches a steady-state through the whole cycle, which differentiates these temperature profiles from those shown in FIG 4B. The temperature profiles for Ti and To on the right-hand side taken X hours later both indicate an overall rise in the temperature, as expected, since the quantity of heat generated at the core winding is bound to be greater due to degradation and the like, compared to the quantity of heat generated in the initial stage of the operation.

When temperature changes occur in a single cycle, as in this case, any change in the heat generation distribution manifesting X hours later may be detected through the method described below.

First, in correspondence to the operation pattern whereby charge and discharge are alternately executed repeatedly, two values for $\alpha o$, i.e., $\alpha o$ for the charge and $\alpha o$ for the discharge, are determined in advance through the method described in reference to embodiment 2 by factoring in the current shift that occurs during the charge and the discharge, as shown in FIG. 4A. The two values are notated as $\alpha c$ and $\alpha d$.

In the initial phase immediately following the operation start, Ti, To and Too are measured at a time point A, marking the end of the charge, as shown on the left side of FIG. 5B. In addition, $\Delta T(1)$ and $\Delta Tc(1)$ are calculated and the values thus obtained are stored. Likewise, at a time point B marking the end of the discharge, too, Ti, To and Too are measured, $\Delta T$ and $\Delta Tc$ are calculated and the values thus obtained are stored.

Subsequently, when X hours have elapsed, the temperatures are measured and $\Delta T(2)$ and $\Delta Tc(2)$ are calculated at time points A and B through a procedure similar to that taken in the initial phase immediately following the operation start.

Since the decision-making procedures for the charge and the discharge are identical to each other, the following description focuses on detection of a heat generation distribution change occurring during the charge.

(1) If the difference between $\Delta Tc(2)$ and $\Delta Tc(1)$, i.e., $\Delta TTc$ is small, it is judged that heat generation quantity has changed only to a small extent, and accordingly, decision-making is executed by judging whether $\Delta TT$ takes a positive value or a negative value, as has been described in reference to embodiment 1.
(2) If $\Delta TTc$ indicates a significant value, it is judged that an increase in the heat generation quantity has occurred during the X-hour period and, accordingly, decision-making is executed by comparing $\alpha$ (= $\Delta TT/\Delta TTc$) calculated as has been described in reference to embodiment 2 with $\alpha c$.

Through the embodiment, it becomes possible to determine whether or not a change has occurred in the heat generation density distribution during a cycling operation, in which the temperature does not remain steady so as to expand the range of applications in which the detection method according to the present invention may be adopted in practical use.

- Embodiment 5 -

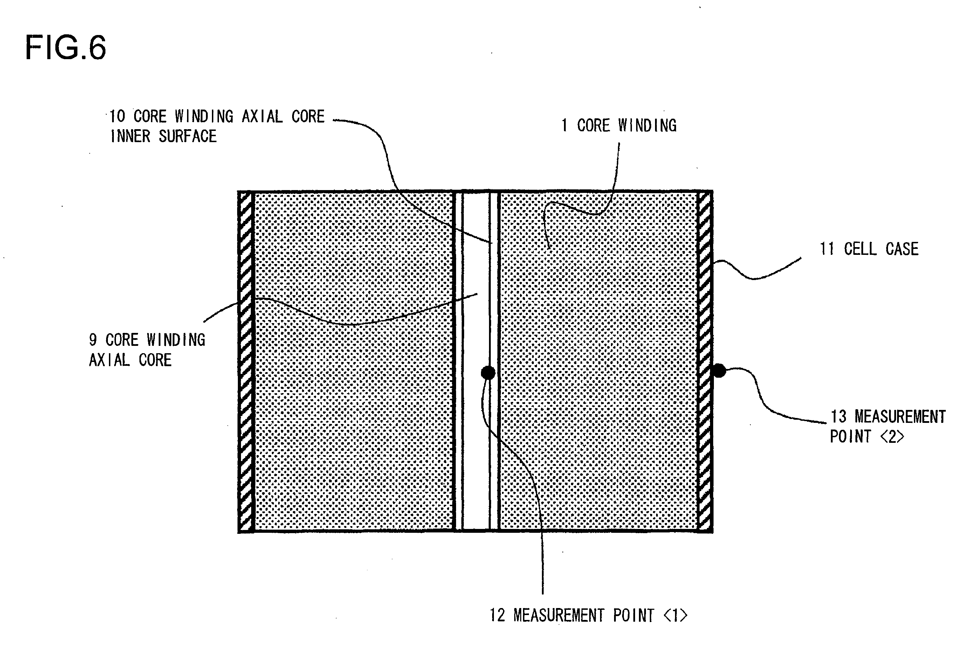

In reference to the fifth embodiment, optimal positions at which temperature sensors may be mounted at an actual battery are described. FIG 6 shows a cylindrical battery in a longitudinal section taken over a middle area thereof along the core winding axis. It shows two temperature measurement points, a measurement point <1> 12 and a measurement point <2> 13. In other words, temperature sensors are mounted at an inner surface 10 of a core winding axial core 9 disposed at the center of the core winding 1 and at an outer surface of a cell case 11 near the mid point along the axial direction. The temperature sensors may be thermocouples or thermistors.

Insertion of a sensor into a cell is normally considered to involve significant risk. It may compromise the insulation and, in a worst-case, it may result in an internal short circuit. Bearing this in mind, positions that are relatively problem free with respect to insulation assurance, are selected as the measurement points. In addition, it is desirable from the viewpoint of reliability assurance, to set the measurement points around the middle area along the axial direction where the temperature is bound to reach the highest level along the axial direction.

However, the sensors may be mounted at positions other than those in the embodiment along the radial direction and detection can be executed without any adverse effect even in conjunction with sensors mounted inside the core winding.

- Embodiment 6 -

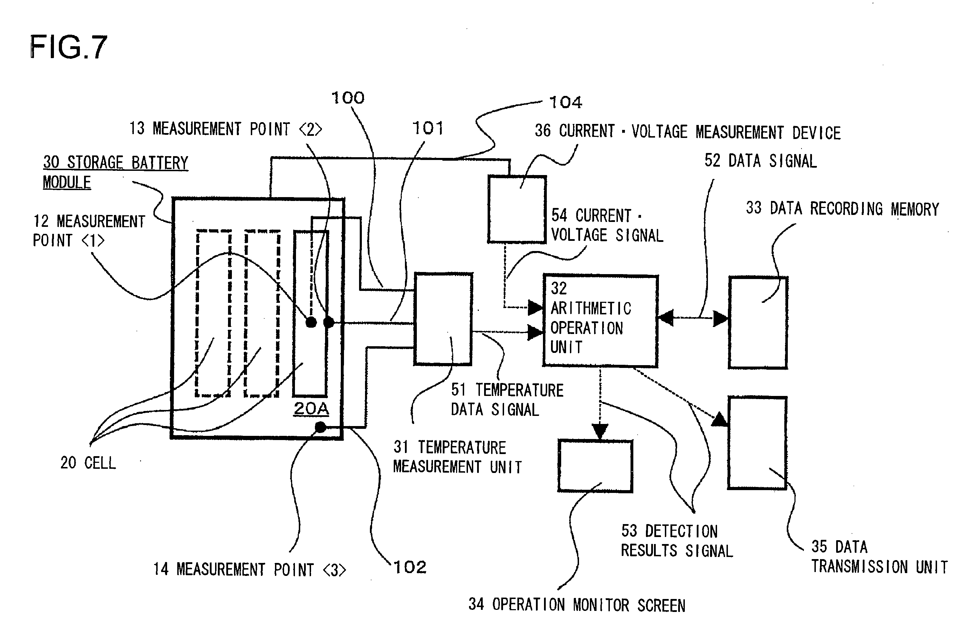

FIG. 7 shows a detection system configured in the sixth embodiment of the present invention in conjunction with a storage battery module made up with a plurality of secondary batteries. A plurality of cells 20 are housed in the storage battery module 30.

The detection system comprises a temperature measurement unit 31, an arithmetic operation unit 32, a data recording memory 33, an operation monitor screen 34, a data transmission unit 35, a module current · voltage measurement device 36 and temperature sensors constituted with thermocouples 100, 101 and 102 and a module current · voltage measurement line 104.

The plurality of cells 20 are disposed inside the battery module 30. In the embodiment, the thermocouple 100 and the thermocouple 101 are respectively mounted at the measurement point <1> 12 and at the measurement point <2> 13 set as shown in FIG. 6 at one cell 20A among the plurality of cells 20. The thermocouples 100 and 101 are connected to the temperature measurement unit 31 so as to enable the measurement unit 31 to take in temperature signals.

In addition, the thermocouple 102 is mounted at a measurement point <3> 14 in the space within the battery module 30. The thermocouple 102, too, is connected to the temperature measurement unit 31 so as to enable the measurement unit 31 to take in a temperature signal. It is to be noted that the temperature sensors do not need to be constituted with thermocouples, and thermistors or the like may be used as the temperature sensors instead.

The various sets of temperature data having been taken in to the temperature measurement unit 31 are then provided to the arithmetic operation unit 32 as temperature data signals 51. In addition, current ·voltage data taken into the module current · voltage measurement device 36 through the current · voltage measurement line 104 are provided from the current · voltage measurement device to the arithmetic operation unit 32 as a current ·voltage signal 54, as well.

The arithmetic operation unit 32 and the data recording memory 33 exchange data signals 52. Through this exchange, data created by the arithmetic operation unit 32 are provided as a data signal 52 to the data recording memory 33 or data in the data recording memory 33 are transmitted to the arithmetic operation unit 32 as a data signal 52. In addition, the detection results provided by the arithmetic operation unit are output as a detection results signal 53 to the operation monitor screen 34 to be viewed by a battery operator. It is to be noted that since the detection system includes the data transmission unit 35, the detection results signal 53 can be further transmitted to an affiliate such as the maintenance · management contractor.

Next, the processing executed by the arithmetic operation unit 32 is described in specific detail in reference to FIGS. 7, 8 and 9.

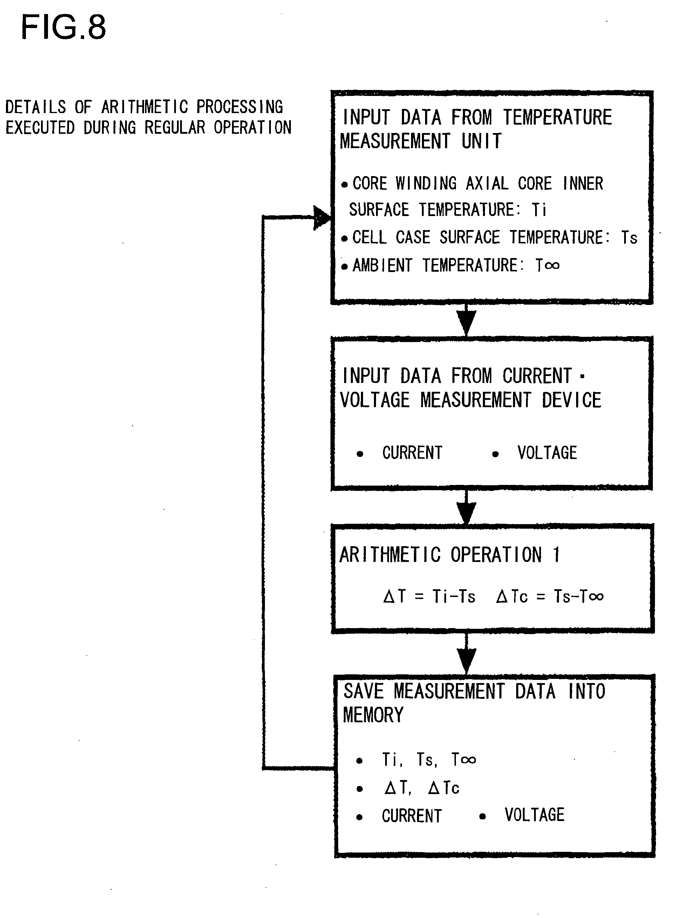

First, the arithmetic operation processing executed during regular operation is described in detail in reference to FIGS. 7 and 8. The arithmetic operation unit 32 receives the core winding central area temperature Ti measured at the measurement point <1> 12, the cell case surface temperature Ts measured at the measurement point <2> 13 and the ambient temperature Too measured at the measurement point <3> 14 from the temperature measurement unit 31 and also receives the current · voltage data from the current · voltage measurement device 36. It is to be noted that the function · part of the temperature measurement unit 31 engaged in the measurement of the temperature at the measurement point <1>, the function · part of the temperature measurement unit 31 engaged in the measurement of the temperature at the measurement point <2> and the function · part of the temperature measurement unit 31 engaged in the measurement of the temperature at the measurement point <3> are respectively defined as a first temperature measurement unit, a second temperature measurement unit and a third temperature measurement unit.

Next, the arithmetic operation unit 32 calculates $\Delta T$ (= Ti - Ts) and $\Delta Tc$ (= Ts - Too) based upon the core winding central area temperature Ti measured at the measurement point <1> 12, the cell case surface temperature Ts measured at the measurement point <2> 13 and the ambient temperature Too measured at the measurement point <3> 14 having been input to the arithmetic operation unit 32. The arithmetic operation unit 32 then provides the various temperature values $\Delta T$, $\Delta Tc$ and the current · voltage data to the data recording memory 33 as data signals 52. The data provided to the data recording memory 33 are stored in the data recording memory 33. Under normal circumstances, the processing described in detail above is repeatedly executed over specific time intervals. The function · part of the arithmetic operation unit 32 engaged in the calculation of a temperature difference between temperatures measured at two different measurement points will be referred to as a temperature difference calculation unit.

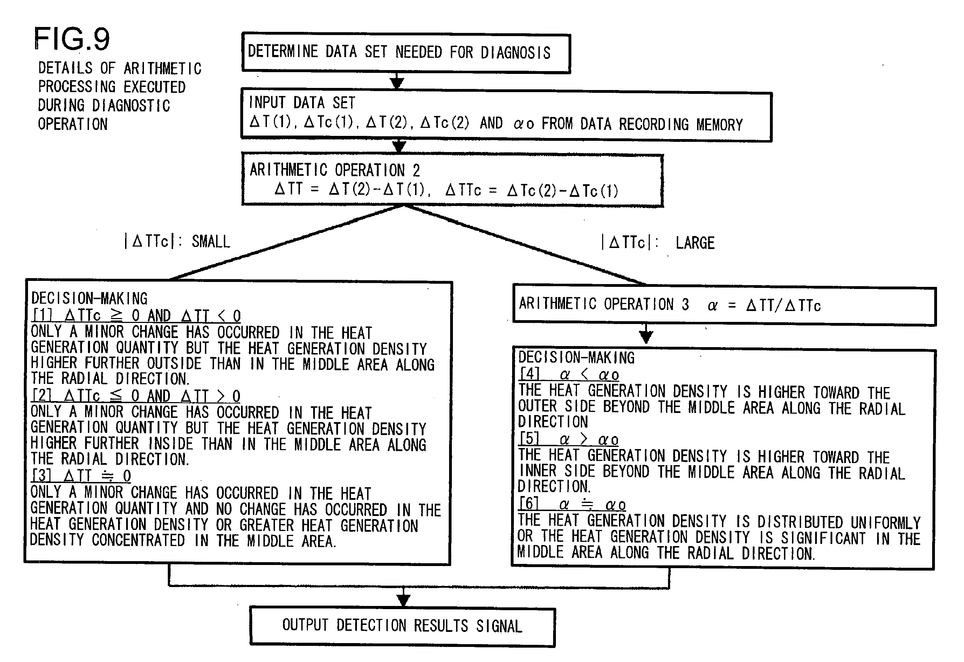

Next, the arithmetic processing executed at the time of the diagnostic operation is described in detail in reference to FIGS. 7 and 9. With the timing of the diagnosis start, the arithmetic operation unit 32 determines a specific data set to be used in the diagnosis from the data saved in the data recording memory 33. The data set needed for diagnostic purposes are the $\Delta T$ data and the $\Delta Tc$ data described earlier, and the arithmetic operation unit 32 selects pre-change $\Delta T(1)$ and $\Delta Tc(1)$ and post-change $\Delta T(2)$ and $\Delta Tc(2)$. In principle, it is desirable to use data obtained in the initial phase immediately after the operation start as the pre-change data $\Delta T(1)$ and $\Delta Tc(1)$ and use data obtained immediately before the diagnosis start as the post-change data $\Delta T(2)$ and $\Delta Tc(2)$. If data obtained immediately before the diagnosis start indicate a significant change in $\Delta TTc$, pre-change $\Delta T(1)$ and $\Delta Tc(1)$ and post-change $\Delta T(2)$ and $\Delta Tc(2)$, corresponding to the particular data location with $\Delta TTc$ indicating the significant change may be used so as to ensure good diagnostic accuracy. The function · part of the arithmetic operation unit 32 engaged in the calculation of the extent of change between the pre-change temperature difference between the temperatures measured at the two measurement points and the post-change temperature difference between the temperatures measured at the two measurement points will be referred to as a change quantity calculation unit.

Once the data set is selected, the data set needed for diagnostic purposes is taken from the data recording memory 33 into the arithmetic operation unit 32 as a data signal 52. Then, based upon the data set, $\Delta TT$ (= $\Delta T(2) - \Delta T(1)$) and $\Delta TTc$ (= $\Delta Tc(2) - \Delta Tc(1)$) are calculated.

Next, the absolute value of $\Delta TTc$ calculated as described above is taken and a decision is made as to whether the absolute value is close to 0 or decisively deviates from 0. If this decision is difficult to make, a decision is instead made by incorporating the current · voltage data into the data set as to whether or not the heat generation quantity has clearly increased or decreased. For instance, an increase in the current can be judged to form a sound ground for determining that a change in the heat generation quantity has occurred. In contrast, if there has been no change in the electric current and $|\Delta TTc|$ is not exactly 0, it can be determined that a slight change in the heat generation quantity, attributable to a factor other than a current increase/decrease, may have occurred.

The operation branches into the flow on the left-hand side in FIG. 9 when $|\Delta TTc|$ is small (close to 0). In this case, the decision-making procedure is executed by adopting the method described in reference to embodiment 1. Namely;

[1] $\Delta TTc \geq 0$ and $\Delta TT < 0$
Only a slight change in the heat generation quantity has occurred but the heat generation density is higher further toward the outer side beyond the middle area along the radial direction.
[2] $\Delta TTc \leq 0$ and $\Delta TT > 0$
Only a slight change in the quantity but the heat generation density is higher further toward the center beyond the middle area along the radial direction.
[3] $\Delta TT \approx 0$
The heat generation quantity has changed only to a small extent, and there has been no change in the heat generation density or there may be dense concentration of heat generation in the middle area.

It is to be noted that the decision-making procedure may be executed by adopting the following alternative decision-making method. As long as the absolute value of $\Delta TTc$ is less than a predetermined value (the absolute value is close to 0), the $\Delta TT$ detection results can be assured to be true and, accordingly, the heat generation density distribution at the winding assembly can be detected simply based upon the value of $\Delta TT$.

[1-1] $\Delta TT < A$
The heat generation density is higher further toward the outside than in the middle area along the radial direction
[2-1] $\Delta TT > B$
The heat generation density is higher further toward the center than in the middle area along the radial direction
[3-1] $A \leq \Delta TT \leq B$
The heat generation density assumes a uniform distribution, or the heat generation density in the middle area along the radial direction is significant
A and B above respectively represent a first threshold value and a second threshold value.
When $|\Delta TTc|$ is a large value, it can be decisively judged that there has been a change in the heat generation quantity. In particular, $\Delta TTc$ assuming a positive value indicating an increase in the heat generation quantity, can be considered problematic from a diagnostic viewpoint. In this case, the operation branches into the flow on the right-hand side in FIG. 9 to calculate $\alpha = \Delta TT/\Delta TTc$ in arithmetic operation 3. In this case, the decision-making procedure is executed based upon $\alpha$ calculated as described above by adopting the method described in reference to embodiment 2. Namely;
[4] $\alpha < \alpha o$: the heat generation density is higher further toward the outer side beyond the middle area along the radial direction.
[5] $\alpha > \alpha o$: the heat generation density is higher further toward the inner side beyond the middle area along the radial direction.
[6] $\alpha \approx \alpha o$: the heat generation density assumes a uniform distribution, or the heat generation density in the middle area along the radial direction is significant.

It is to be noted that $\alpha$o represents $\alpha$ calculated in the initial phase of the operation, as has been explained earlier in reference to embodiment 2.

It is to be noted that the decision-making procedure may instead be executed by adopting the following alternative method. Namely, by assuming a specific range for the value calculated for $\alpha$o, the logic expressed in [4] through [6] above may be modified as follows.

[4-1] $\alpha$ < C: the heat generation density is higher further toward the outer side beyond the middle area along the radial direction.

[5-1] $\alpha$ > D: the heat generation density is higher further toward the center beyond the middle area along the radial direction.

[6-1] C $\leq \alpha \leq$ D: the heat generation density assumes a uniform distribution, or the heat generation density in the middle area along the radial direction is significant.

C and D above respectively represent a third threshold value and a fourth threshold value.

The decision-making results obtained as described in [1] through [6] above, i.e., the detection results indicating whether or not the heat generation quantity has changed, whether or not the heat generation distribution has changed and the specific condition pertaining to the heat generation distribution, are output as a detection results signal 53 from the arithmetic operation unit 32. The function · part of the arithmetic operation unit 32 engaged in the detection of the heat generation distribution will be referred to as a heat generation distribution detection unit.

It is to be noted that any abnormal change in the voltage occurring during the charge or discharge may be detected and the internal resistance may be calculated by analyzing the current · voltage data saved in the data recording memory 33 as part of the arithmetic operation processing so as to determine with even more accuracy whether or not any change has occurred in the heat generation distribution and a specific condition of the heat generation distribution through the diagnostic procedure.

Through the embodiment, operational control, maintenance and management of the entire module can be achieved with a minimum number of detection cells by designating a specific cell in the module, e.g., a cell located at a position where it is bound to be subjected to the harshest ambient temperature conditions, as a detection cell or by installing a single detection cell in each serial cell group among the battery cell groups, each constituted with battery cells connected in series, which are set parallel to one another.

Through the embodiment described above, any change in the heat generation distribution occurring in a cell and details of the change can be detected, which makes it possible to detect a fault quicker than through any of the heat generation quantity detection methods of the related art and ultimately to execute battery operational control and battery maintenance · management with a higher level of reliability.

The present operation, which relates to a method for detecting a fault occurring inside a secondary battery, may be adopted in a diagnosis method and a diagnostic system that enable diagnosis pertaining to the condition of a secondary battery, a secondary battery module or a battery pack used in a hybrid vehicle, an electric vehicle or a hybrid railway vehicle or in an industrial storage battery used for purposes of electricity storage.

The above described embodiments are examples and various modifications can be made without departing from the scope of the invention.

## Claims

1.  A secondary battery system capable of controlling charge/discharge of a secondary battery that includes a core winding, comprising:

    a first temperature measurement unit that measures a temperature in a central area of the core winding;
    a second temperature measurement unit that measures a temperature in an outer circumferential area of the core winding;
    a temperature difference calculation unit that calculates a temperature difference $\Delta T$ between the temperature in the central area and the temperature in the outer circumferential area at the core winding, respectively measured by the first temperature measurement unit and the second temperature measurement unit;
    a change quantity calculation unit that calculates a change quantity $\Delta TT$ indicating an extent of change in the temperature difference $\Delta T$ between the temperatures in the central area and in the outer circumferential area of the core winding represented by a difference between a temperature difference $\Delta T1$ calculated at a start of use of the secondary battery and a temperature difference $\Delta T2$ calculated after a predetermined length of time elapses following the start of use of the secondary battery; and
    a heat generation distribution detection unit that executes detection of a heat generation distribution at a winding assembly based upon the change quantity $\Delta TT$.

2.  A secondary battery system according to claim 1, wherein:

    if the change quantity $\Delta TT$ is less than a first threshold value, the heat generation distribution detection unit determines that heat generation density is higher toward an outer circumferential side beyond a middle area of the winding assembly along a radial direction.

**3.** A secondary battery system according to claim 1, wherein:

if the change quantity ΔTT is greater than a second threshold value, the heat generation distribution detection unit determines that heat generation density is higher toward a center beyond a middle area of the winding assembly along a radial direction.

**4.** A secondary battery system according to claim 1, wherein:

if the change quantity ΔTT is equal to or greater than a first threshold value and equal to or less than a second threshold value, the heat generation distribution detection unit determines that heat generation density is evenly distributed or that the heat generation density is high at the winding assembly in a middle area thereof along a radial direction.

**5.** A secondary battery system according to claim 1, further comprising:

a third temperature measurement unit that measures a temperature in a surrounding area around the secondary battery, wherein:

the temperature difference calculation unit calculates a temperature difference ΔTc between the temperature in the outer circumferential area of the core winding and the temperature in the surrounding area around the secondary battery, respectively measured by the second temperature measurement unit and the third temperature measurement unit;
the change quantity calculation unit calculates a change quantity ΔTTc, indicating an extent of change in the temperature difference ΔTc between the temperature in the outer circumferential area of the core winding and the temperature in the surrounding area around the secondary battery, represented by a difference between a temperature difference ΔTc1 calculated at a start of use of the secondary battery and a temperature difference ΔTc2 calculated after a predetermined length of time elapses following the start of use of the secondary battery; and
if an absolute value of the change quantity ΔTTc is less than a predetermined value, the heat generation distribution detection unit judges that the results of the detection are correct.

**6.** A secondary battery system according to claim 1, further comprising:

a third temperature measurement unit that measures a temperature in a surrounding area around the secondary battery, wherein:

the temperature difference calculation unit calculates a temperature difference ΔTc between the temperature in the outer circumferential area of the core winding and the temperature in the surrounding area around the secondary battery, respectively measured by the second temperature measurement unit and the third temperature measurement unit;
the change quantity calculation unit calculates a change quantity ΔTTc, indicating an extent of change in the temperature difference ΔTc between the temperature in the outer circumferential area of the core winding and the temperature in the surrounding area around the secondary battery, represented by a difference between the temperature difference ΔTc1 calculated at a start of use of the secondary battery and the temperature difference ΔTc2 calculated after a predetermined length of time elapses following the start of use of the secondary battery; and
the heat generation distribution detection unit detects the heat generation distribution at the winding assembly based upon a ratio α of the change quantity ΔTT and the change quantity ΔTTc.

**7.** A secondary battery system according to claim 6, wherein:

if the ratio α of the change quantity ΔTT and the change quantity ΔTTc is less than a third threshold value, the heat generation distribution detection unit determines that the heat generation density is higher toward an outer circumferential side beyond a middle area of the winding assembly along a radial direction.

**8.** A secondary battery system according to claim 6, wherein:

if the ratio α of the change quantity ΔTT and the change quantity ΔTTc is greater than a fourth threshold value, the heat generation distribution detection unit determines that heat generation density is higher toward a center beyond a middle area of the winding assembly along a radial direction.

9. A secondary battery system according to claim 6, wherein:

   if the ratio $\alpha$ of the change quantity $\Delta TT$ and the change quantity $\Delta TTc$ is equal to or greater than a third threshold value and equal to or less than a fourth threshold value, the heat generation distribution detection unit determines that heat generation density is evenly distributed or that the heat generation density is high at the winding assembly in a middle area thereof along a radial direction.

10. A secondary battery system according to claim 1, wherein:

   the first temperature measurement unit is installed at a surface of an axial core disposed in the central area of the core winding.

11. A secondary battery system according to claim 1, wherein:

   the second temperature measurement unit is installed at a surface of a cell case in which the core winding is housed in a sealed state.

## FIG.1

40 TEMPERATURE DISTRIBUTION

2 CORE WINDING CENTRAL AREA

Ti

ΔT

To

3 CORE WINDING
INNERMOST PORTION

4 CORE WINDING
OUTERMOST PORTION

1 CORE WINDING

5 HEAT FLOW

## FIG.2A

HEAT GENERATION DENSITY TOWARD CENTER; HIGH (CASE 2)

PRE-CHANGE TEMPERATURE
DISTRIBUTION (EVEN HEAT
GENERATION CASE 1)

HEAT GENERATION DENSITY

HEAT GENERATION DENSITY ON SURFACE SIDE;
HIGH (CASE 3)

INNERMOST PORTION

OUTERMOST PORTION

CORE WINDING RADIAL RANGE

**FIG.2B** HEAT GENERATION DENSITY TOWARD CENTER; HIGH (CASE 2)

PRE-CHANGE TEMPERATURE DISTRIBUTION
(EVEN HEAT GENERATION CASE 1)

Ti

To

HEAT GENERATION DENSITY ON
SURFACE SIDE; HIGH (CASE 3)

TEMPERATURE

INNERMOST PORTION          OUTERMOST PORTION

CORE WINDING RADIAL RANGE

**FIG.3A**

4 CORE WINDING OUTERMOST PORTION

3 CORE WINDING INNERMOST PORTION

1 CORE
WINDING

6 CENTRAL HEAT GENERATION
LOCATION

8 SURFACE HEAT GENERATION LOCATION

7 MIDDLE AREA HEAT GENERATION LOCATION

# FIG.3B

LOCAL HEAT GENERATION IN CENTRAL AREA

LOCAL HEAT GENERATION IN MIDDLE AREA

$T_i$

TEMPERATURE

EVEN HEAT GENERATION

LOCAL HEAT GENERATION AT SURFACE

$T_o$

BEFORE INCREASE IN HEAT GENERATION

INNERMOST PORTION                    OUTERMOST PORTION

CORE WINDING RADIAL RANGE

EP 2 437 339 A1

# FIG.4A

CHARGE OR DISCHARGE CURRENT

CURRENT $I_1$

CURRENT $I_2$

TIME

# FIG.4B

CORE WINDING INNERMOST
PORTION TEMPERATURE: Ti

CORE WINDING OUTERMOST
PORTION TEMPERATURE: To

TEMPERATURE

$\Delta T(1)$

$\Delta T(2)$

$\Delta Tc(2)$

$\Delta Tc(1)$

AMBIENT
TEMPERATURE: T∞

TIME

EP 2 437 339 A1

# FIG.5A

CHARGE/DISCHARGE OPERATION
PATTERN (INITIAL PHASE)

CHARGE/DISCHARGE OPERATION PATTERN AFTER X
HOURS (SAME AS THAT IN INITIAL PHASE)

AFTER X HOURS

EP 2 437 339 A1

# FIG.5B

CORE WINDING
INNERMOST PORTION
TEMPERATURE: Ti

CORE WINDING
OUTERMOST PORTION
TEMPERATURE: To

AFTER X HOURS

AMBIENT TEMPERATURE: T∞

EP 2 437 339 A1

# FIG.6

10 CORE WINDING AXIAL CORE INNER SURFACE

1 CORE WINDING

11 CELL CASE

9 CORE WINDING AXIAL CORE

13 MEASUREMENT POINT <2>

12 MEASUREMENT POINT <1>

EP 2 437 339 A1

# FIG.7

# FIG.8

DETAILS OF ARITHMETIC PROCESSING
EXECUTED DURING REGULAR OPERATION

INPUT DATA FROM TEMPERATURE
MEASUREMENT UNIT

- CORE WINDING AXIAL CORE INNER
  SURFACE TEMPERATURE: $Ti$
- CELL CASE SURFACE TEMPERATURE: $Ts$
- AMBIENT TEMPERATURE: $T\infty$

INPUT DATA FROM CURRENT ·
VOLTAGE MEASUREMENT DEVICE

- CURRENT   - VOLTAGE

ARITHMETIC OPERATION 1

$$\Delta T = Ti - Ts \quad \Delta Tc = Ts - T\infty$$

SAVE MEASUREMENT DATA INTO
MEMORY

- $Ti, Ts, T\infty$
- $\Delta T, \Delta Tc$
- CURRENT   - VOLTAGE

# FIG.9

DETAILS OF ARITHMETIC
PROCESSING EXECUTED
DURING DIAGNOSTIC
OPERATION

DETERMINE DATA SET NEEDED FOR DIAGNOSIS

↓

INPUT DATA SET
$\Delta T(1)$, $\Delta Tc(1)$, $\Delta T(2)$, $\Delta Tc(2)$ AND $\alpha o$ FROM DATA RECORDING MEMORY

↓

ARITHMETIC OPERATION 2
$\Delta TT = \Delta T(2) - \Delta T(1)$, $\Delta TTc = \Delta Tc(2) - \Delta Tc(1)$

$|\Delta TTc|$: SMALL

$|\Delta TTc|$: LARGE

DECISION-MAKING
[1] $\Delta TTc \geq 0$ AND $\Delta TT < 0$
ONLY A MINOR CHANGE HAS OCCURRED IN THE HEAT
GENERATION QUANTITY BUT THE HEAT GENERATION DENSITY
HIGHER FURTHER OUTSIDE THAN IN THE MIDDLE AREA ALONG
THE RADIAL DIRECTION.
[2] $\Delta TTc \leq 0$ AND $\Delta TT > 0$
ONLY A MINOR CHANGE HAS OCCURRED IN THE HEAT
GENERATION QUANTITY BUT THE HEAT GENERATION DENSITY
HIGHER FURTHER INSIDE THAN IN THE MIDDLE AREA ALONG
THE RADIAL DIRECTION.
[3] $\Delta TT \fallingdotseq 0$
ONLY A MINOR CHANGE HAS OCCURRED IN THE HEAT
GENERATION QUANTITY AND NO CHANGE HAS OCCURRED IN THE
HEAT GENERATION DENSITY OR GREATER HEAT GENERATION
DENSITY CONCENTRATED IN THE MIDDLE AREA.

ARITHMETIC OPERATION 3   $\alpha = \Delta TT / \Delta TTc$

↓

DECISION-MAKING
[4] $\alpha < \alpha o$
THE HEAT GENERATION DENSITY IS HIGHER TOWARD THE
OUTER SIDE BEYOND THE MIDDLE AREA ALONG THE RADIAL
DIRECTION
[5] $\alpha > \alpha o$
THE HEAT GENERATION DENSITY IS HIGHER TOWARD THE
INNER SIDE BEYOND THE MIDDLE AREA ALONG THE RADIAL
DIRECTION.
[6] $\alpha \fallingdotseq \alpha o$
THE HEAT GENERATION DENSITY IS DISTRIBUTED UNIFORMLY
OR THE HEAT GENERATION DENSITY IS SIGNIFICANT IN THE
MIDDLE AREA ALONG THE RADIAL DIRECTION.

↓

OUTPUT DETECTION RESULTS SIGNAL

EP 2 437 339 A1

Europäisches
Patentamt

European
Patent Office

Office européen
des brevets

**EUROPEAN SEARCH REPORT**

Application Number

EP 11 17 8097

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | JP 2001 313087 A (SANYO ELECTRIC CO) 9 November 2001 (2001-11-09) * abstract * ----- | 1-11 | INV. H01M10/04 H01M10/44 H01M10/48 H02J7/00 |
| A | US 2002/079866 A1 (ODAOHHARA SHIGEFUMI [JP]) 27 June 2002 (2002-06-27) * claims 1-6 * ----- | 1-11 | |
| A | JP 2008 041376 A (TOYOTA MOTOR CORP) 21 February 2008 (2008-02-21) * abstract * ----- | 1-11 | |
| A | WO 2010/049795 A1 (TOYOTA MOTOR CO LTD [JP]; MINAMIURA KEIICHI [JP]) 6 May 2010 (2010-05-06) * the whole document * ----- | 1-11 | |

TECHNICAL FIELDS
SEARCHED (IPC)

H01M
H02J

The present search report has been drawn up for all claims

| Place of search | Date of completion of the search | Examiner |
|---|---|---|
| Munich | 6 December 2011 | Goldbacher, Ute |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 11 17 8097

This annex lists the patent family members relating to the patent documents cited in the above-mentioned European search report.
The members are as contained in the European Patent Office EDP file on
The European Patent Office is in no way liable for these particulars which are merely given for the purpose of information.

06-12-2011

| Patent document cited in search report | Publication date | Patent family member(s) | | Publication date |
|---|---|---|---|---|
| JP 2001313087 A | 09-11-2001 | JP<br>JP | 3913443 B2<br>2001313087 A | 09-05-2007<br>09-11-2001 |
| US 2002079866 A1 | 27-06-2002 | JP<br>JP<br>US | 4566392 B2<br>2002163038 A<br>2002079866 A1 | 20-10-2010<br>07-06-2002<br>27-06-2002 |
| JP 2008041376 A | 21-02-2008 | NONE | | |
| WO 2010049795 A1 | 06-05-2010 | CN<br>EP<br>JP<br>US<br>WO | 102204003 A<br>2351140 A1<br>2010108750 A<br>2011199053 A1<br>2010049795 A1 | 28-09-2011<br>03-08-2011<br>13-05-2010<br>18-08-2011<br>06-05-2010 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2010220236 A
- JP 2001313087 A
- JP H10055825 B
- JP 2007165211 A